# EUROPEAN PATENT APPLICATION

(11) **EP 1 028 578 A2**
(43) Date of publication of application: **16.08.2000**
(21) Application number: 00300106.2
(22) Date of filing: 10.01.2000
(51) Int. Cl.: H04M 3/42, H04M 1/57, H04M 7/12, H04M 3/36

(54) **Methods and apparatus for remotely accessing call originating information**

(30) Priority: 10.02.1999 US 244989
(71) Applicant: AT&T Corp., New York, NY 10013-2412 (US)
(72) Inventor: Henderson, Donnie, Monmouth, New Jersey 07726 (US)
(74) Representative: Asquith, Julian Peter

(57) **Abstract**

A method and apparatus remotely accesses a user's caller identification system using existing caller identification systems and standard telephony systems by capturing telephone call origination information from a telephone call, storing the origination information in a compute network file system, and displaying the origination information to a user either via a World Wide Web site, transmitting it to the user's email account, thus automatically informing the user of an incoming call, or making it available to the user via a telephone interface device that responds to input from the user either via touch tones or voice. The user is able to manage the contents of the user's call-log using a web-browser (9). The end result is that users are able to view their office telephone activity logs form anywhere in the network, using a web browser (9), which is much more convenient than checking voice mail.

## Description

### BACKGROUND OF THE INVENTION

The present invention relates generally to methods and apparatuses for obtaining telephone call origination information from incoming telephone calls, and more specifically to a method and apparatus for obtaining telephone call origination information from an incoming telephone call remotely.

Today, caller identification systems are currently relatively ubiquitous. While these systems are inherently useful, current caller identification systems require the user to access the information from the site of the caller identification system. For example, upon receiving a telephone call at home, the caller identification system logs the caller's telephone number into its memory, which can be retrieved locally from the caller identification system. But, if the user is not at home, the user does not know about the attempted telephone call.

The present invention is therefore directed to the problem of developing a method and apparatus for remotely accessing a user's caller identification system using existing caller identification systems and standard telephony systems.

### SUMMARY OF THE INVENTION

The present invention solves this problem by capturing telephone call origination information from a telephone call, storing the origination information in a computer network file system, transmitting the origination information over a communications network, such as the Internet, and displaying the origination information to a user via a graphical user interface.

According to the present invention, one particularly advantageous implementation of the above method includes displaying the origination information to the user via a World Wide Web site and providing web site editing tools for enabling the user to manage the contents of the World Wide Web site. For example, CGI scripts that enable a user to open a web page, review the contents, and modify the contents of the web page by clicking on selected items.

According to another aspect of the present invention, the origination information is transmitted to the user's email account, thus automatically informing the user of an incoming call. One particularly advantageous result of the implementation is that if the user is on-line when the call is placed to the user's home, the user can almost instantly receive an email from his home indicating the receipt of a telephone call and the originating telephone number, thereby enabling the user to return the call immediately, if desired.

According to yet another aspect of the present invention, the origination information is made available to the user via a telephone interface device that responds to input from the user either via touch tones or voice commands.

### BRIEF DESCRIPTION OF THE DRAWINGS

FIG 1 depicts one exemplary embodiment of the present invention.
FIG 2 depicts another exemplary embodiment of the present invention.
FIG 3 depicts yet another exemplary embodiment of the present invention.

### DETAILED DESCRIPTION

According to one aspect of the present invention, a web-based system/service enables users to access their call-log using a web browser. The system captures telephone call origination (caller-id) information for a user, stores the telephone call origination information in a computer network file system, transmits the origination information to a designated web site on the Internet (or, alternatively, to a particular email account) and allows the user to display and manage the contents of the user's call-log using a web-browser. The end result is that users are able to view their office telephone activity logs from anywhere they can access the network using a web browser.

In the alternative embodiment of the present invention discussed parenthetically above, the telephone call origination information is formatted and transmitted to a particular email account (designated by the user during a setup operation). In this embodiment, if the caller is on-line when the telephone call arrives at the remote location, the system can almost immediately inform the user. This embodiment presents several possibilities.

First, the user could then immediately telephone the caller.

Second, the user could activate a call forwarding device that intercepted the call and forwarded the call to the current location before dropping the call (assuming the email was sufficiently fast).

Third, the user could activate a return call feature from his current location. In this embodiment, the origination information would be automatically downloaded to a telephone at the current site and upon entering a designated key sequence, the telephone at the current site would place the return call.

Fourth, the telephone network could receive a copy of the email causing the network to update the contents of the return call registry for the telephone at the user's current site (under the assumption that the user wished to selectively activate the return call feature as if the user was at home). In this case, if the user pressed the designated key sequence on the telephone at his current site, the telephone would automatically dial the number represented in the telephone call origination information, as if the user were at the remote site.

According to another aspect of the present invention, general remote call-log access to these logs via the World Wide Web is now possible. Furthermore, the present invention provides that one's call logs appear in one's E-mail account. Users will be able to get individual call-log events as they occur, or they can request the entire call-log be emailed to them as a single message.

Furthermore, the present invention also provides a device and service that allows a telephony services consumer to access their call-log information remotely using any telephone.

It is often desirable to know who has called regardless of whether you answered the call or not. Current caller-id service does this for the telephony customer today. It allows users to screen calls, and it gives a user a log of most inbound calls. The present invention increases the usefulness of these systems by allowing customers to remotely access the call-log information that is being presented by their caller-id service. The end result is that users are able to view their office or home phone activity logs from anywhere they have access to the network, using a web browser, or any email reader. For example, working from home, a user can use the system to instantly "scan" for calls (e.g., to his office telephone) using the user's web-browser.

The present invention includes several subsystems. First is the remotely accessible caller-id unit (RAC). The RAC is a telephony add-on device that performs caller-id display, with some additional capability. The RAC allows one to dial in, then navigate within, listen to, and manage, their caller-id/call-log records remotely by phone using a touch-tone interface. The actual call-log entries are presented to the remote user over the phone using a built in Text-to-Speech (TTS) converter.

A second subsystem is the remotely accessible caller-id unit + answering machine (RACA). This capability integrates into today's answering machines. According to the present invention, one unit takes messages, performs caller-id with call logging, and allows remote retrieval and management of messages and call log information.

### Exemplary Operation

When the user is away from home, the user calls the user's home "RACA" device. When the RACA answers, the user uses a touch-tone pad to authenticate by entering an access code, such as "1234". The user then uses touch-tones to navigate a verbal menu, allowing the user to retrieve and manage any voice messages left for the user and allowing the user to listen to call information captured and logged by the built in caller-id. Such voice menu systems that respond to touch tones are well-known to those of skill in the art.

Alternatively, the user receives an email indicating that a call was received at home, and the telephone number of the caller. Or, the user accesses a designated web site that displays the user's telephone call log.

According to the present invention, telephony provider network-based call-log service is now possible with remote dial-up access. In this service, the telephony service provider sets up services where the customer call logs are kept and maintained in the telephony provider's network for a fee. The telephony service provided then provides central dial up numbers where subscribers to the service call, authenticate, then listen to and manage their call logs (with Text-to-Speech playback) much as they do their telco-provided voice mail. This call logging provides a very simple, attractive, innovative and differentiating service for a local or regional telco provider to implement since they already capture/generate caller-id information calls in their networks.

Note that this service can be made available to all customers regardless of whether or not they use an "at home" caller-id service. In fact, a customer's caller-id device remains useful for call screening and local viewing of call log activity.

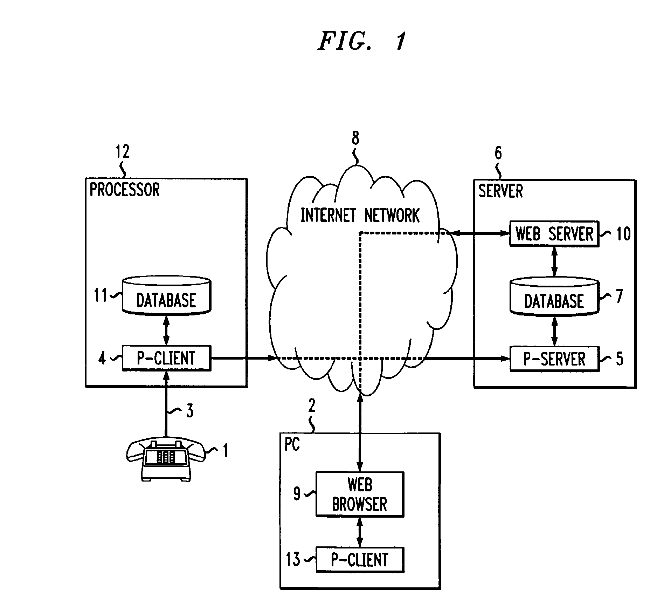

Referring to FIG 1, which depicts one exemplary embodiment of the present invention, the user's office phone 1 is connected to a processor, (e.g., a PC/workstation) 2 by a cable 3 (e.g., a serial cable). When a call arrives, a client process (P-client) 4 on the users machine 12 captures the caller-id information and sends it to a server process (P-server) 5 running on a web-server machine 6 coupled to the network 8 (e.g., the Internet). The data is stored in a database file 7 on the web server 6. This file store 7 is accessible to both the P-server process 5 and any web-server (CGI) processes 10 running on the web-server machine 6.

When a user on his PC 2 using a web browser 9 goes to the Call-Manager URL (which activates a CGI script), the web-server CGI 10 retrieves the users call log information, formats it into a web page and sends it to the user's browser 9, which is displayed on the user's PC. The user's PC 2 can be remotely located or even at the same site as the processor 12. The CGI scripts enable the user to download a web page, review the contents and modify the contents by pointing a mouse pointer and clicking on selected items. For example, the user can select a particular call on the call log, review the telephone number, copy the telephone number into a telephone directory, or return the call directly from the user's personal computer by clicking on the selection and using a click-dial routine.

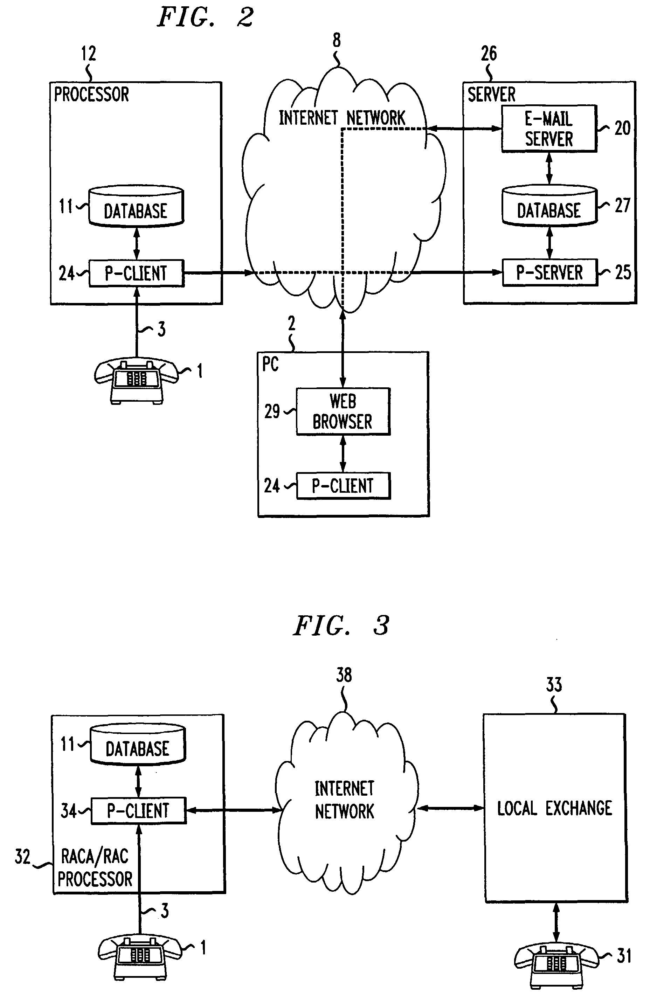

Referring to FIG 2, the system operates similarly to that described with reference to FIG 1, except that the system interfaces with an email server 20 and uses an email viewer 29 rather than a web server 10 and web browser 9. As shown in FIG 2, a telephone 1 is coupled to a processor, such as a personal computer/workstation 12 via a serial cable 3. A client process 24 running on the processor 12 captures the caller origination information, formats the information as an email and transmits it to the server process 25 running on the email server 20. The email server 20 then stores the email in the proper email account in the database 27. The email server process 20 then upon request from the user's PC 2 transmits the email to the user's PC 2, which is reviewed by the user via an email viewer, such ad Eudora Light™.

Referring to FIG 3, a third embodiment of the present invention is depicted. Shown therein, a telephone 1 receives a telephone call, whose caller identification information is captured by the process 34 running on the processor 32. The caller identification information is stored in storage 11 as a network file. Telephone 31 is coupled to the processor 32 via Local ExChange (LEC) 33 and communications network 38.

Upon receiving a call from an outside telephone, the processor 32 prompts the caller for a password, which can be entered via either a touch tone sequence or by voice using voice recognition. Once properly identified, the system then successively prompts the user through a menu of choices, including playing back the caller identification information, similar to that of a voice answering machine.

## Claims

1. A method for enabling a user to obtain caller origination information from a remotely located telephone, comprising the steps of:
a) capturing telephone call origination information from a telephone call;
b) storing the telephone call origination information in a computer network file system;
c) transmitting the telephone call origination information via a computer network to a server on the network; and
d) displaying the telephone call origination information to a user via a graphical user interface.

2. The method according to claim 1, further comprising the step of formatting the telephone call origination information as a log and displaying the log to the user on a World Wide Web site.

3. The method according to claim 2, further comprising the step of providing a web site editor for enabling the user to manage and edit the contents of the World Wide Web site.

4. The method according to claim 1, further comprising the steps of formatting the telephone call origination information as a email and transmitting the telephone call origination email to the user upon request by the user.

5. The method according to claim 1, further comprising the step of formatting the telephone call origination information as an email and automatically transmitting the telephone call origination email to the user's email account.

6. The method according to claim 1, further comprising the step of playing a menu of command choices to a user, which are selectable by the user by pressing a particular touch tone key sequence.

7. The method according to claim 6, further comprising the step of responding to user commands input in the form of touch tones.

8. The method according to claim 1, further comprising the step of playing a menu of command choices to a user, which are selectable by the user by uttering a particular phrase.

9. The method according to claim 8, further comprising the step of responding to verbal commands.

10. An apparatus for enabling a user to obtain caller origination information for a remotely located telephone, comprising:
a) a telephone call origination information capturing device coupled to the remotely located telephone;
b) a storage coupled to the telephone call origination information capturing device and storing telephone call origination information in the form of a computer network file; and
c) a display displaying the telephone call origination information to a user.

11. The apparatus according to claim 10, further comprising a processor formatting the telephone call origination information as a log and sending the log to a World Wide Web site for display therein to the user.

12. The apparatus according to claim 11, further comprising a Web site editor enabling the user to edit the contents of the World Wide Web site.

13. The apparatus according to claim 10, further comprising a processor formatting the telephone call origination information as an email and transmitting the email to the user's email account upon request by the user.

14. The apparatus according to claim 10, further comprising a processor formatting the telephone call origination information as an email and automatically transmitting the telephone call origination information to the user's email account.

15. The apparatus according to claim 10, further comprising a telephone interface device coupled to the telephone and playing a menu of command choices to a user, which are selectable by the user by pressing a particular touch tone key sequence.

16. The apparatus according to claim 15, wherein the telephone interface device responds to user commands input in the form of touch tones.

17. The apparatus according to claim 10, wherein the telephone interface device plays a menu of command choices to a user, which are selectable by the user by uttering a particular phrase.

18. The apparatus according to claim 17, wherein the telephone interface device responds to user commands input verbally.

19. A device for enabling a user to obtain caller origination information for a remotely located telephone, comprising:
a) means for capturing telephone call origination information from a telephone call;
b) means for storing the telephone call origination information in a computer network file system; and
c) means for displaying the telephone call origination information to a user; and
d) means for formatting the telephone call origination information as a log and displaying the log to the user on a World Wide Web site.

20. The device according to claim 19, further comprising means for formatting the telephone call origination information as an email and transmitting the email to the user's email account.

21. An apparatus for enabling a user to remotely obtain caller identification information comprising:
a) a processor executing a routine to capture caller identification signals;
b) storage being coupled to the processor and storing the caller identification signals as a network file;
c) a server executing a process to receive the network file and display caller identification information in the network file on a web site; and
d) a personal computer executing a process to access the web site and display the caller identification information to the user.

22. The apparatus according to claim 21, further comprising a routine executed upon the user accessing the web site, enabling the user to review the caller identification information, select portions of the information in the caller identification information for storage in a user telephone directory, delete calls from the caller identification information, and return calls from the personal computer using a click-dial routine.

23. The apparatus according to claim 22, wherein the routine includes a CGI application.
